(19) Europäisches Patentamt
European Patent Office
Office européen des brevets

(11) **EP 3 595 386 A1**

(12) **EUROPEAN PATENT APPLICATION**
published in accordance with Art. 153(4) EPC

(43) Date of publication:
**15.01.2020 Bulletin 2020/03**

(51) Int Cl.:
***H04W 72/04*** *(2009.01)*

(21) Application number: **18834352.9**

(22) Date of filing: **07.05.2018**

(86) International application number:
**PCT/CN2018/085811**

(87) International publication number:
**WO 2019/015378 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2017 CN 201710596241**

(71) Applicant: **Huawei Technologies Co., Ltd.**
**Longgang District**
**Shenzhen, Guangdong 518129 (CN)**

(72) Inventors:
• **RONG, Lu**
  **Shenzhen**
  **Guangdong 518129 (CN)**
• **LIU, Yong**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **DATA TRANSMISSION METHOD AND DEVICE**

(57) This application discloses a data transmission method, including: determining, by a network device, control information, where the control information includes a first field, a second field, and at least one third field; the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; sending, by the network device, the control information to a terminal; and performing, by the network device, data transmission with the terminal based on the control information. According to the solution provided in this application, in the control information, the length of the second field used to indicate the antenna port configuration information and the quantity of the third fields used to indicate the configuration information of the transport block can be flexibly determined based on the quantity of to-be-transmitted transport blocks, thereby improving flexibility of setting a format of the control information and reducing signaling overheads of the control information in a plurality of scenarios.

FIG. 3

## Description

This application claims priority to Chinese Patent Application No. 201710596241.0, filed with the Chinese Patent Office on July 20, 2017 and entitled "DATA TRANSMISSION METHOD AND DEVICE", which is incorporated herein by reference in its entirety.

## TECHNICAL FIELD

This application relates to the field of communications technologies, and specifically, to a data transmission method and device.

## BACKGROUND

In a long term evolution (English full name: long term evolution, LTE for short) system, after a physical (English full name: physical, PHY for short) layer of a transmitter receives a transport block (English full name: transport block, TB for short) from a media access control (English full name: medium access control, MAC for short) layer, a string of bit data is generated through transport block processing operations, such as CRC attachment, channel coding, rate matching, and code block cascading. The bit data is referred to as a codeword (English full name: codeword, CW for short) in the LTE system.

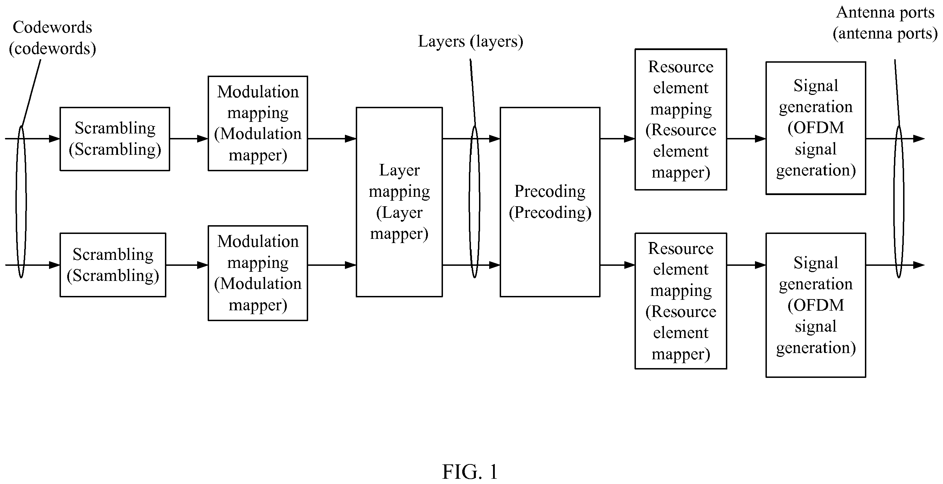

In a current LTE system, simultaneous transmission of at most two transport blocks is supported, and a quantity of codewords is equal to a quantity of transport blocks. As shown in FIG. 1, using LTE downlink transmission as an example, after physical channel processing operations, such as scrambling, modulation, layer mapping, precoding, resource mapping, and orthogonal frequency division multiplexing (English full name: orthogonal frequency division multiplexing, OFDM for short) signal generation, are performed on a codeword, a signal to be sent on each antenna port is generated.

Before receiving or sending data, a terminal needs to receive scheduling signaling from a network, so that the terminal learns of which configuration should be used at a particular time-frequency resource location to receive or send the data.

In the LTE system, signaling, for example, dynamic scheduling signaling, is carried in a physical downlink control channel (English full name: physical downlink control channel, PDCCH for short), where content of the signaling is downlink control information (English full name: downlink control information, DCI for short), and a format (format) of the signaling content is specified by a DCI format. A plurality of DCI formats are defined in the LTE system. The plurality of DCI formats can support different types of transmission respectively, for example, some DCI formats can support downlink (English full name: downlink, DL for short) transmission, some DCI formats can support uplink (English full name: uplink, UL for short) transmission, some DCI formats can support one-codeword transmission, and some DCI formats can support two-codeword transmission.

For example, a DCI format 2C in the LTE system supports multi-layer spatial multiplexing of DL transmission, and can support two-codeword or one-codeword transmission. The DCI format 2C includes the following fields:

First field (carrier indicator field): Carrier indicator - 1 bit
Second field (antenna port information field): Antenna port(s), scrambling identity, and number of layers - 3 bits
1st third field (configuration information field of a transport block 1):

- Modulation and coding scheme (Modulation and coding scheme) - 5 bits
- New data indicator (New data indicator) - 1 bit
- Redundancy version (Redundancy version) - 2 bits

2nd third field (configuration information field of a transport block 2):

- Modulation and coding scheme (Modulation and coding scheme) - 5 bits
- New data indicator (New data indicator) - 1 bit
- Redundancy version (Redundancy version) - 2 bits

It may be learned from the description of the foregoing DCI format that, in the prior art, a length of each field in the DCI format is fixed. Even if lengths of the foregoing fields vary with one-codeword transmission or two-codeword transmission, to facilitate detection by the terminal, a DCI format has to be designed based on a maximum length in one-codeword or two-codeword transmission, regardless of whether the DCI format is a one-codeword DCI format or a two-codeword DCI format. This shows that a manner of setting the DCI format is not flexible during data transmission in the prior art.

## SUMMARY

To resolve a problem that setting of a format of control information is not flexible during data transmission in the prior art, embodiments of this application provide a data transmission method. In control information, a length of a second field used to indicate antenna port configuration information and a quantity of third fields used to indicate configuration information of a transport block can be flexibly determined based on a quantity of to-be-transmitted transport blocks, thereby improving flexibility of setting a format of the control information and reducing signaling overheads of the control information in a plurality of scenarios. The embodiments of this application further provide a corresponding device.

According to a first aspect, this application provides a data transmission method. The method is applied to a process of data transmission between a terminal and a network device. The network device may be a base station, and the method includes: determining, by a network device, control information, where the control information may be control information in a DCI format, and the control information includes a first field, a second field, and at least one third field; the first field is used to indicate a quantity of to-be-transmitted transport blocks; the second field includes antenna port configuration information, and a length of the second field is related to the quantity of transport blocks, that is, the length of the second field may be determined based on the quantity of transport blocks; the third field includes configuration information of the transport block, and a quantity of the third fields is related to the quantity of transport blocks, that is, the quantity of the third fields may be determined based on the quantity of transport blocks; the length of the second field is a quantity of bits of the second field, and the quantity of the third fields corresponds to the quantity of TBs; usually one TB corresponds to one third field; the third field usually includes three parts: a modulation and coding scheme, a new data indicator, and a redundancy version; and usually a length of one third field is 8 bits; sending, by the network device, the control information to a terminal; and performing, by the network device, data transmission with the terminal based on the control information. In other words, the terminal can perform data transmission with the network device based on statuses of the fields in the control information. It may be learned from the first aspect that, the length of the second field and the quantity of the third fields can be flexibly determined based on the quantity of to-be-transmitted transport blocks, thereby improving flexibility of setting a format of the control information and reducing signaling overheads of the control information in a plurality of scenarios.

With reference to the first aspect, in a first possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a scenario in which a maximum quantity of layers of a transport layer is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the first aspect or the first possible implementation of the first aspect, in a second possible implementation, the method further includes: determining, by the network device, a value of a higher layer parameter, where the value of the higher layer parameter and the first field are used to determine the length of the second field; and sending, by the network device, a higher layer message to the terminal, where the higher layer message is used to indicate the value of the higher layer parameter. The higher layer parameter may be transmitted by using radio resource control (English full name: Radio Resource Control, RRC for short) signaling. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the second possible implementation, the length of the second field is flexibly determined.

With reference to the first aspect or the first or second possible implementation of the first aspect, in a third possible implementation, when the first field indicates that the quantity of transport blocks is 1, the control information further includes a fourth field, where information in the fourth field is used to indicate a codeword used during data transmission, and the codeword is a representation form of the transport block in a physical layer. In the third possible implementation, a codeword with a relatively good channel condition may be selected based on channel conditions to transmit one transport block, thereby improving data transmission efficiency.

With reference to the first aspect or the first, second, or third possible implementation of the first aspect, in a fourth possible implementation, the method further includes: determining, by the network device, whether the format of the control information is configured; where if the format of the control information is not configured or if the format of the control information is configured and the value of the configuration parameter is set to a preset value, the first field is null and the configuration parameter is used to configure the format of the control information. The preset value may be 0, or may be another value. In the fourth possible implementation, whether the first field is used can be flexibly determined according to a requirement, so that signaling overheads can be further reduced in some scenarios.

According to a second aspect, this application provides a data transmission method. The method is applied to a process of data transmission between a terminal and a network device. The network device may be a base station, and the method includes: determining, by a network device, control information and a configuration parameter of the control information, where the configuration parameter is used to configure a format of the control information, that is, the configuration parameter is used to configure a structure of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format; sending, by the network device, the control information and the configuration parameter to a terminal; and performing, by the network device, data transmission with the terminal based on the control information and the configuration parameter. The first configuration value and the second configuration value may be specific values. For example, the first configuration value is 0, and the second configuration value is 1. Certainly, the first configuration value and the second configuration value each may be another value. The second aspect provides a scheme for switching on or off the first field. When the value of the configuration parameter is the first configuration value, the first field is configured; or when the value of the configuration parameter is the second configuration value, the first field is not configured. In this way, when the value of the configuration parameter is the first configuration value, signaling overheads can be reduced; or when the value of the configuration parameter is the second configuration value, the first field can be saved and signaling overheads can be reduced.

With reference to the second aspect, in a first possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a transmission scenario in which a maximum quantity of layers is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the second aspect or the first possible implementation of the second aspect, in a second possible implementation, the method further includes: determining, by the network device, a value of a higher layer parameter, where the value of the higher layer parameter and the first field are used to determine the length of the second field; and sending, by the network device, a higher layer message to the terminal, where the higher layer message is used to indicate the value of the higher layer parameter. The higher layer parameter may be transmitted by using RRC signaling. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the second possible implementation, the length of the second field is flexibly determined.

With reference to the second aspect or the first or second possible implementation of the second aspect, in a third possible implementation, when the first field indicates that the quantity of transport blocks is 1, the control information further includes a fourth field, where information in the fourth field is used to indicate a codeword used during data transmission, and the codeword is a representation form of the transport block in a physical layer. In the third possible implementation, a codeword with a relatively good channel condition may be selected based on channel conditions to transmit one transport block, thereby improving data transmission efficiency.

According to a third aspect, this application provides a data transmission method. The method is applied to a process of data transmission between a terminal and a network device. The terminal may be a device such as a mobile phone or a tablet computer, and the method includes: receiving, by a terminal, control information sent by a network device, where the control information may be control information in a DCI format, and the control information includes a first field, a second field, and at least one third field; the first field is used to indicate a quantity of to-be-transmitted transport blocks; the second field includes antenna port configuration information, and a length of the second field is related to the quantity of transport blocks; the third field includes configuration information of the transport block, and a quantity of the third fields is related to the quantity of transport blocks; the length of the second field is a quantity of bits of the second field, and the quantity of the third fields corresponds to the quantity of TBs; usually one TB corresponds to one third field; the third field usually includes three parts: a modulation and coding scheme, a new data indicator, and a redundancy version; and usually a length of one third field is 8 bits; and performing, by the terminal, data transmission with the network device based on the control information. In other words, the terminal can perform data transmission based on statuses of the fields in the control information. It may be learned from the third aspect that, the length of the second field and the quantity of the third fields can be flexibly determined based on the quantity of to-be-transmitted transport blocks, thereby improving flexibility of setting a format of the control information and reducing signaling overheads of the control information in a plurality of scenarios.

With reference to the third aspect, in a first possible implementation, after the terminal receives the control information sent by the network device, the method further includes: determining, by the terminal, the length of the second field and the quantity of the third fields respectively based on the quantity of transport blocks; determining, by the terminal, antenna port configuration information of the to-be-transmitted transport block from the second field based on the length of the second field, and determining the configuration information of the to-be-transmitted transport block from the third field based on the quantity of the third fields; and performing, by the terminal, data transmission with the network device based on the quantity of transport blocks, the antenna port configuration information, and the configuration information.

With reference to the third aspect or the first possible implementation of the third aspect, in a second possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a transmission scenario in which a maximum quantity of layers is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the third aspect or the first or second possible implementation of the third aspect, in a third possible implementation, the method further includes: receiving, by the terminal, a higher layer message sent by the network device, where the higher layer message is used to indicate a value of a higher layer parameter, and the value of the higher layer parameter and the first field are used to determine the length of the second field. The higher layer parameter may be transmitted by using RRC signaling. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the third possible implementation, the length of the second field is flexibly determined.

With reference to any one of the third aspect or the first to the third possible implementations of the third aspect, in a fourth possible implementation, when the first field indicates that the quantity of transport blocks is 1, the control information further includes a fourth field, where information in the fourth field is used to indicate a codeword used during data transmission, and the codeword is a representation form of the transport block in a physical layer. The terminal performs data transmission by using the codeword indicated by the information in the fourth field. In the fourth possible implementation, a codeword with a relatively good channel condition may be selected based on channel conditions to transmit one transport block, thereby improving data transmission efficiency.

With reference to any one of the third aspect or the first to the fourth possible implementations of the third aspect, in a fifth possible implementation, the method further includes: when the terminal does not receive a configuration parameter corresponding to a format of the control information within a preset time or a received configuration parameter is a preset value, determining that the first field is null. The preset value may be 0, or may be another value. In the fifth possible implementation, whether the first field is used can be flexibly determined according to a requirement, so that signaling overheads can be further reduced in some scenarios.

According to a fourth aspect, this application provides a data transmission method. The method is applied to a process of data transmission between a terminal and a network device. The network device may be a base station, and the method includes: receiving, by a terminal, control information and a configuration parameter of the control information that are sent by a network device, where the configuration parameter is used to configure a format of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format; and performing, by the terminal, data transmission with the network device based on the control information and the configuration parameter. It may be learned from the fourth aspect that, the fourth aspect provides a scheme for switching on or off the first field. When the value of the configuration parameter is the first configuration value, the first field is configured; or when the value of the configuration parameter is the second configuration value, the first field is not configured. In this way, when the value of the configuration parameter is the first configuration value, signaling overheads can be reduced; or when the value of the configuration parameter is the second configuration value, the first field can be saved and signaling overheads can be reduced.

With reference to the fourth aspect, in a first possible implementation, the method further includes: determining, by the terminal, the length of the second field and the quantity of the third fields respectively based on the quantity of transport blocks; determining, by the terminal, antenna port configuration information of the to-be-transmitted transport block from the second field based on the length of the second field, and determining the configuration information of the to-be-transmitted transport block from the third field based on the quantity of the third fields; and performing, by the terminal, data transmission with the network device based on the quantity of transport blocks, the antenna port configuration information, and the configuration information.

With reference to the fourth aspect or the first possible implementation of the fourth aspect, in a second possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a transmission scenario in which a maximum quantity of layers is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the second possible implementation that, compared with a fixed field setting manner, signaling overheads can be reduced in a plurality of scenarios.

With reference to the fourth aspect or the first or second possible implementation of the fourth aspect, in a third possible implementation, the method further includes: receiving, by the terminal, a higher layer message sent by the network device, where the higher layer message is used to indicate a value of a higher layer parameter, and the value of the higher layer parameter and the first field are used to determine the length of the second field. The higher layer parameter may be transmitted by using RRC signaling. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the fourth possible implementation, the length of the second field is flexibly determined.

With reference to any one of the fourth aspect or the first to the third possible implementations of the fourth aspect, in a fourth possible implementation, when the first field indicates that the quantity of transport blocks is 1, the control information further includes a fourth field, where information in the fourth field is used to indicate a codeword used during data transmission, and the codeword is a representation form of the transport block in a physical layer. The terminal performs data transmission by using the codeword indicated by the information in the fourth field. In the fifth possible implementation, a codeword with a relatively good channel condition may be selected based on channel conditions to transmit one transport block, thereby improving data transmission efficiency.

According to a fifth aspect, this application provides a network device. The network device may be a base station, and the network device includes a transceiver and at least one processor. The network device may further include a memory. The memory, the transceiver, and the at least one processor are interconnected by using a bus. The memory stores an instruction, and the instruction is executed by the at least one processor.

The processor is configured to determine control information, where the control information may be control information in a DCI format, and the control information includes a first field, a second field, and at least one third field. The first field is used to indicate a quantity of to-be-transmitted transport blocks. The second field includes antenna port configuration information, and a length of the second field is related to the quantity of transport blocks. The third field includes configuration information of the transport block, and a quantity of the third fields is related to the quantity of transport blocks.

The transceiver is configured to send the control information to a terminal.

The processor controls the transceiver to perform data transmission based on the control information with the terminal.

It may be learned from the foregoing fifth aspect that, the length of the second field and the quantity of the third fields can be flexibly determined based on the quantity of to-be-transmitted transport blocks, thereby improving flexibility of setting a format of the control information and reducing signaling overheads of the control information in a plurality of scenarios.

With reference to the fifth aspect, in a first possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a scenario in which a maximum quantity of layers of a transport layer is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the fifth aspect or the first possible implementation of the fifth aspect, in a second possible implementation,

the processor is further configured to determine a value of a higher layer parameter, where the value of the higher layer parameter and the first field are used to determine the length of the second field; and

the transceiver is further configured to send a higher layer message to the terminal, where the higher layer message is used to indicate the value of the higher layer parameter.

It may be learned from the second possible implementation of the fifth aspect that, when the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the second possible implementation, the length of the second field is flexibly determined.

With reference to the fifth aspect or the first or second possible implementation of the fifth aspect, in a third possible implementation, when the first field indicates that the quantity of transport blocks is 1, the control information further includes a fourth field, where information in the fourth field is used to indicate a codeword used during data transmission, and the codeword is a representation form of the transport block in a physical layer. In the third possible implementation, a codeword with a relatively good channel condition may be selected based on channel conditions to transmit one transport block, thereby improving data transmission efficiency.

With reference to the fifth aspect or the first, second, or third possible implementation of the fifth aspect, in a fourth possible implementation, the processor is further configured to determine whether the format of the control information is configured; where if the format of the control information is not configured or if the format of the control information is configured and the value of the configuration parameter is set to a preset value, the first field is null and the configuration parameter is used to configure the format of the control information. The preset value may be 0, or may be another value. In the fourth possible implementation, whether the first field is used can be flexibly determined according to a requirement, so that signaling overheads can be further reduced in some scenarios.

According to a sixth aspect, this application provides a network device. The network device may be a base station, and the network device includes a transceiver and at least one processor. The network device may further include a memory. The memory, the transceiver, and the at least one processor are interconnected by using a bus. The memory stores an instruction, and the instruction is executed by the at least one processor.

The processor is configured to determine control information and a configuration parameter of the control information, where the configuration parameter is used to configure a format of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format.

The transceiver is configured to send the control information and the configuration parameter to a terminal.

The processor controls the transceiver to perform data transmission based on the control information and the configuration parameter with the terminal.

The first configuration value and the second configuration value may be specific values. For example, the first configuration value is 0, and the second configuration value is 1. Certainly, the first configuration value and the second configuration value each may be another value. The sixth aspect provides a scheme for switching on or off the first field. When the value of the configuration parameter is the first configuration value, the first field is configured; or when the value of the configuration parameter is the second configuration value, the first field is not configured. In this way, when the value of the configuration parameter is the first configuration value, signaling overheads can be reduced; or when the value of the configuration parameter is the second configuration value, the first field can be saved and signaling overheads can be reduced.

With reference to the sixth aspect, in a first possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a scenario in which a maximum quantity of layers of a transport layer is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the sixth aspect or the first possible implementation of the sixth aspect, in a second possible implementation,

the processor is further configured to determine a value of a higher layer parameter, where the value of the higher layer parameter and the first field are used to determine the length of the second field; and

the transceiver is further configured to send a higher layer message to the terminal, where the higher layer message is used to indicate the value of the higher layer parameter.

It may be learned from the second possible implementation of the sixth aspect that, when the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the second possible implementation, the length of the second field is flexibly determined.

With reference to the sixth aspect or the first or second possible implementation of the sixth aspect, in a third possible implementation, when the first field indicates that the quantity of transport blocks is 1, the control information further includes a fourth field, where information in the fourth field is used to indicate a codeword used during data transmission, and the codeword is a representation form of the transport block in a physical layer. In the third possible implementation, a codeword with a relatively good channel condition may be selected based on channel conditions to transmit one transport block, thereby improving data transmission efficiency.

According to a seventh aspect, this application provides a terminal. The terminal may be a device such as a mobile phone or a tablet computer, and the terminal includes a transceiver and at least one processor. The terminal may further include a memory. The memory, the transceiver, and the at least one processor are interconnected by using a bus. The memory stores an instruction, and the instruction is executed by the at least one processor.

The transceiver is configured to receive control information sent by a network device, where the control information may be control information in a DCI format, and the control information includes a first field, a second field, and at least one third field. The first field is used to indicate a quantity of to-be-transmitted transport blocks. The second field includes antenna port configuration information, and a length of the second field is related to the quantity of transport blocks. The third field includes configuration information of the transport block, and a quantity of the third fields is related to the quantity of transport blocks.

The processor controls the transceiver to perform data transmission based on the control information with the network device.

It may be learned from the seventh aspect that, the length of the second field and the quantity of the third fields can be flexibly determined based on the quantity of to-be-transmitted transport blocks, thereby improving flexibility of setting a format of the control information and reducing signaling overheads of the control information in a plurality of scenarios.

With reference to the seventh aspect, in a first possible implementation, the processor is further configured to:

determine the length of the second field and the quantity of the third fields respectively based on the quantity of transport blocks; and

determine antenna port configuration information of the to-be-transmitted transport block from the second field based on the length of the second field, and determine the configuration information of the to-be-transmitted transport block from the third field based on the quantity of the third fields; and

the transceiver is specifically configured to perform data transmission with the network device based on the quantity of transport blocks, the antenna port configuration information, and the configuration information of the transport block.

With reference to the seventh aspect or the first possible implementation of the seventh aspect, in a second possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a transmission scenario in which a maximum quantity of layers is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the seventh aspect or the first or second possible implementation of the seventh aspect, in a third possible implementation, the transceiver is further configured to receive a higher layer message sent by the terminal, where the higher layer message is used to indicate a value of a higher layer parameter, and the value of the higher layer parameter and the first field are used to determine the length of the second field. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the third possible implementation, the length of the second field is flexibly determined.

With reference to any one of the seventh aspect or the first to the third possible implementations of the seventh aspect, in a fourth possible implementation, when the first field indicates that the quantity of transport blocks is 1, the control information further includes a fourth field, where information in the fourth field is used to indicate a codeword used during data transmission, and the codeword is a representation form of the transport block in a physical layer. The terminal performs data transmission by using the codeword indicated by the information in the fourth field. In the fourth possible implementation, a codeword with a relatively good channel condition may be selected based on channel conditions to transmit one transport block, thereby improving data transmission efficiency.

With reference to any one of the seventh aspect or the first to the fourth possible implementations of the seventh aspect, in a fifth possible implementation, the processor is further configured to: when the transceiver does not receive a configuration parameter corresponding to a format of the control information within a preset time or a received configuration parameter is a preset value, determine that the first field is null. The preset value may be 0, or may be another value. In the fifth possible implementation, whether the first field is used can be flexibly determined according to a requirement, so that signaling overheads can be further reduced in some scenarios.

According to an eighth aspect, this application provides a terminal. The terminal may be a device such as a mobile phone or a tablet computer, and the terminal includes a transceiver and at least one processor. The terminal may further include a memory. The memory, the transceiver, and the at least one processor are interconnected by using a bus. The memory stores an instruction, and the instruction is executed by the at least one processor.

The transceiver is configured to receive control information and a configuration parameter of the control information that are sent by a network device, where the configuration parameter is used to configure a format of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format.

The processor controls the transceiver to perform data transmission based on the control information and the configuration parameter with the network device.

With reference to the eighth aspect, in a first possible implementation, the processor is further configured to:

determine the length of the second field and the quantity of the third fields respectively based on the quantity of transport blocks; and
determine antenna port configuration information of the to-be-transmitted transport block from the second field based on the length of the second field, and determine the configuration information of the to-be-transmitted transport block from the third field based on the quantity of the third fields; and
the transceiver is specifically configured to perform data transmission with the network device based on the quantity of transport blocks, the antenna port configuration information, and the configuration information of the transport block.

With reference to the eighth aspect or the first possible implementation of the eighth aspect, in a second possible implementation, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value. For example, in a transmission scenario in which a maximum quantity of layers is 6, when the first field indicates that the quantity of transport blocks is 1, the length of the second field is 4 bits and the quantity of the third fields is 1; or when the first field indicates that the quantity of transport blocks is 2, the length of the second field is 1 bit and the quantity of the third fields is 2. In this scenario, when the first value is 1, the length of the second field is 4 bits and the quantity of the third fields is 1; or when the second value is 2, the length of the second field is 1 bit and the quantity of the third fields is 2. It may be learned from the first possible implementation that, compared with a fixed field setting manner, signaling overheads can be reduced in a plurality of scenarios.

With reference to the eighth aspect or the first or second possible implementation of the eighth aspect, in a third possible implementation, the transceiver is further configured to receive a higher layer message sent by the terminal, where the higher layer message is used to indicate a value of a higher layer parameter, and the value of the higher layer parameter and the first field are used to determine the length of the second field. When the value of the higher layer parameter varies, the length of the second field may also vary. For example, a table corresponding to the second field may be selected based on a configuration status of the higher layer parameter and the quantity of transport blocks. Alternatively, the length of the second field may be determined based on the quantity of transport blocks, the value of the higher layer parameter, and a preset formula; or the length of the second field may be determined based on a mapping relationship between the higher layer parameter and the length of the second field when the quantity of transport blocks varies. In sum, in the third possible implementation, the length of the second field is flexibly determined.

With reference to any one of the eighth aspect or the first to the third possible implementations of the eighth aspect, in a fourth possible implementation, when the first field indicates that the quantity of transport blocks is 1, the control information further includes a fourth field, where information in the fourth field is used to indicate a codeword used during data transmission, and the codeword is a representation form of the transport block in a physical layer. The terminal performs data transmission by using the codeword indicated by the information in the fourth field. In the fourth possible implementation, a codeword with a relatively good channel condition may be selected based on channel conditions to transmit one transport block, thereby improving data transmission efficiency.

According to a ninth aspect, this application provides a system chip, including: at least one processor and an interface circuit. The system chip may further include a memory. The memory, the interface circuit, and the at least one processor are interconnected by using a bus. The memory stores an instruction, and the instruction is executed by the at least one processor, and a network device is enabled to perform operations performed by the network device in any one of the first aspect or the possible implementations of the first aspect, or any one of the second aspect or the possible implementations of the second aspect.

According to a tenth aspect, this application provides a system chip, including: at least one processor and an interface circuit. The system chip may further include a memory. The memory, the interface circuit, and the at least one processor are interconnected by using a bus. The memory stores an instruction, and the instruction is executed by the at least one processor, so that a terminal performs operations performed by the terminal in the method provided in any one of the third aspect or the possible implementations of the third aspect, or any one of the fourth aspect or the possible implementations of the fourth aspect.

According to still another aspect, this application provides a computer readable storage medium, where the computer readable storage medium stores an instruction, and when the instruction runs on a computer, the computer is enabled to perform the methods in the foregoing aspects.

According to still another aspect, this application provides a computer program product that includes an instruction, where when the instruction runs on a computer, the computer is enabled to perform the methods in the foregoing aspects.

According to still another aspect, this application provides a data transmission system, including a network device and a terminal; where

the network device is the network device described in any one of the fifth aspect or the possible implementations of the fifth aspect; and

the terminal is the terminal described in any one of the seventh aspect or the possible implementations of the seventh aspect.

According to still another aspect, this application provides a data transmission system, including a network device and a terminal; where

the network device is the network device described in any one of the sixth aspect or the possible implementations of the sixth aspect; and

the terminal is the terminal described in any one of the eighth aspect or the possible implementations of the eighth aspect.

According to the data transmission method provided in the embodiments of this application, the control information includes the first field used to indicate the quantity of to-be-transmitted transport blocks, the length of the second field is related to and determined by the quantity of transport blocks, and the quantity of the third fields is related to and determined based on the quantity of transport blocks, thereby improving flexibility of setting a format of the control information and reducing signaling overheads of the control information in a plurality of scenarios.

**BRIEF DESCRIPTION OF DRAWINGS**

FIG. 1 is a schematic diagram of an example of a codeword processing process;
FIG. 2 is a schematic diagram of a data transmission system according to an embodiment of this application;
FIG. 3 is a schematic diagram of a data transmission method according to an embodiment of this application;
FIG. 4 is a schematic diagram of a data transmission method according to an embodiment of this application;
FIG. 5 is a schematic diagram of a network device according to an embodiment of this application;
FIG. 6 is a schematic diagram of a terminal according to an embodiment of this application;
FIG. 7 is a schematic diagram of a terminal according to another embodiment of this application;
FIG. 8 is a schematic diagram of a terminal according to another embodiment of this application;
FIG. 9 is a schematic diagram of a network device according to an embodiment of this application;
FIG. 10 is a schematic diagram of a terminal according to another embodiment of this application; and
FIG. 11 is a schematic diagram of a system chip according to an embodiment of this application.

**DESCRIPTION OF EMBODIMENTS**

The following describes embodiments of this application with reference to the accompanying drawings. Apparently, the described embodiments are merely some rather than all of the embodiments of this application. A person of ordinary skill in the art may understand that, with development of technologies, the technical solutions provided in the embodiments of this application are also applicable to similar technical problems.

The embodiments of this application provide a data transmission method. In control information, a length of a second field used to indicate antenna port configuration information and a quantity of third fields used to indicate configuration information of a transport block can be flexibly determined based on a quantity of to-be-transmitted transport blocks, thereby improving flexibility of setting a format of the control information and reducing signaling overheads of the control information in a plurality of scenarios. The embodiments of this application further provide a corresponding device and system. The following describes them separately in detail.

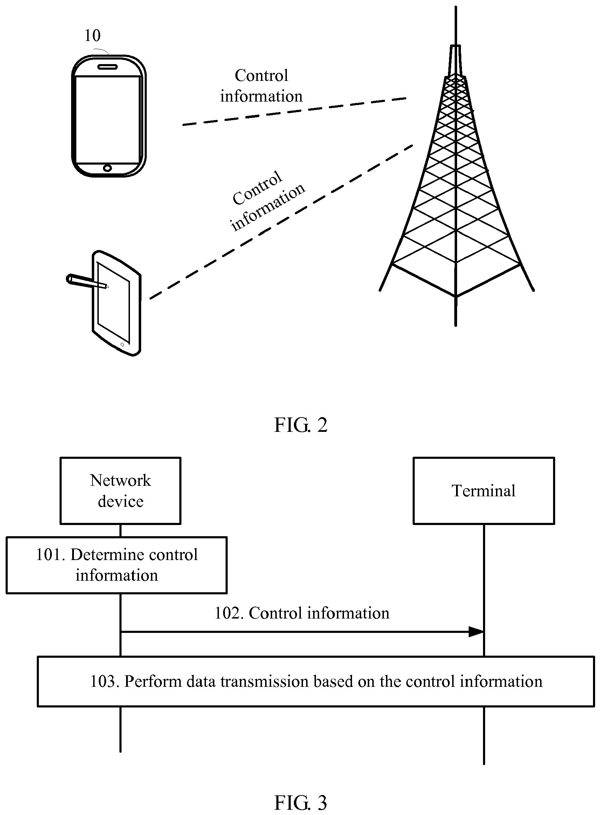

FIG. 2 is a schematic diagram of a data transmission system according to an embodiment of this application.

As shown in FIG. 2, the data transmission system includes a network device and a terminal, and the network device may be a base station. In an LTE system, the base station may be referred to as an evolved NodeB eNobe, and the network device may alternatively be a radio access network (radio access network, RAN) device. Certainly, the network device may be another device that can perform a corresponding control information configuration function. The terminal may include a device that performs data transmission based on control information, for example, a mobile phone or a tablet computer.

In the data transmission system shown in FIG. 2, the network device determines control information and sends the control information to the terminal, regardless of whether uplink transmission or downlink transmission is performed on data, so that the terminal completes reception or sending of the data.

Based on the data transmission system shown in FIG. 2, the following describes a data transmission method in an embodiment of this application with reference to FIG. 3.

As shown in FIG. 3, an embodiment of this application provides a data transmission method, including the following steps.

101. A network device determines control information.

The control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks.

The first field may indicate the quantity of TBs, an identifier of the quantity of TBs, or other information that can be used to determine the quantity of TBs. For example, the information that can be used to determine the quantity of TBs may be a quantity of codewords. A mapping relationship between the quantity of TBs and the quantity of CWs may be pre-agreed, so that data of the TB can be determined based on the quantity of CWs. Certainly, the first field may further indicate other information that can be used to determine the quantity of TBs.

The length of the second field, that is, a quantity of bits, may be determined based on the quantity of TBs.

The quantity of the third fields corresponds to the quantity of TBs. Usually, one TB corresponds to one third field. The third field usually includes three parts: a modulation and coding scheme, a new data indicator, and a redundancy version. Usually a length of one third field is 8 bits.

The length of the second field is determined based on the quantity of TBs, and the quantity of the third fields may be determined based on the quantity of TBs.

When the quantity of transport blocks indicated by the first field is a first value, the length of the second field is a first length and the quantity of the third fields is the first value; or

when the quantity of transport blocks indicated by the first field is a second value, the length of the second field is less than the first length and the quantity of the third fields is the second value, where the second value is greater than the first value.

For example, if the quantity of TBs is the first value, the first value may be 1, the length of the second field may be 4 bits, and the quantity of the third fields may be 1; if the quantity of TBs is the second value, the second value may be 2, the length of the second field may be 1 bit, and the quantity of the third fields may be 2; or if the quantity of TBs is 3 or another value, the length of the second field may be determined based on this value, and the quantity of the third fields may be determined based on the quantity of TBs.

Because one TB usually corresponds to one codeword, one TB may be referred to as one codeword, and two TBs may be referred to as two codewords.

102. The network device sends the control information to a terminal.

103. After receiving the control information sent by the network device, the terminal performs data transmission with the network device based on the control information.

Compared with the prior art, according to the data transmission method provided in this embodiment of this application, in the control information, the length of the second field used to indicate the antenna port configuration information and the quantity of the third fields used to indicate the configuration information of the transport block can be flexibly determined based on the quantity of to-be-transmitted transport blocks, thereby improving flexibility of setting a format of the control information and reducing signaling overheads of the control information in a plurality of scenarios.

The transmission system usually includes a plurality of layers. In multi-layer transmission, information about the second field includes a mapped layer and an antenna port number. During data transmission, data needs to be mapped into a corresponding layer based on layer information and the antenna port number in the second field, and is transmitted by a corresponding antenna port number.

A six-layer transmission layer is used as an example, that is, a maximum quantity of layers is 6. Usually, one codeword is used for transmission in the case of four layers or less, and two codewords are used for transmission in the case of five layers or six layers. In this way, to record each layer and an antenna port number thereof during one-codeword transmission, four bits are needed for one-codeword transmission; and because there are only two cases: five layers and six layers in the case of two codewords, only one bit is needed.

Information about the second field for one codeword may be understood with reference to Table 1.

**Table 1 Second field for one codeword**

| Value | Message |
|---|---|
| 0 | 1 layer, port 0 |
| 1 | 1 layer, port 1 |
| 2 | 1 layer, port 2 |
| 3 | 1 layer, port 3 |
| 4 | 1 layer, port 4 |
| 5 | 1 layer, port 5 |
| 6 | 2 layer, port 0-1 |
| 7 | 2 layer, port 2-3 |
| 8 | 2 layer, port 4-5 |
| 9 | 3 layer, port 0-2 |
| 10 | 3 layer, port 3-5 |
| 11 | 4 layer, port 0-3 |
| 12 | Reserved |
| ... | ... |
| 15 | Reserved |
| In Table 1, "Value" indicates a value of the second field, "Message" indicates a quantity of layers and antenna port information that correspond to the value of the second field, "layer" indicates a layer, "port" indicates an antenna port, and "Reserved" indicates a reserved field. Corresponding layer and antenna port information may be configured in the Reserved field based on a requirement. ||

Information about the second field for two codewords may be understood with reference to Table 2.

**Table 2 Second field for two codewords**

| Value | Message |
|---|---|
| 0 | 5 layer, port 0-4 (SU) |
| 1 | 6 layer, port 0-5 (SU) |
| In Table 2, "Value" indicates a value of the second field, "Message" indicates a quantity of layers and antenna port information that correspond to the value of the second field, "layer" indicates a layer, "port" indicates an antenna port, and "Reserved" indicates a reserved field. Corresponding layer and antenna port information may be configured in the Reserved field based on a requirement. ||

Certainly, the antenna port number and layer mapping that are indicated by the second field in Table 1 and Table 2 may alternatively be represented by using only one table, as shown in Table 3.

**Table 3**

| One Codeword (≤ 4 layers):<br>Codeword 0 enabled,<br>Codeword 1 disabled | | Two Codewords (> 4 layers):<br>Codeword 0 enabled,<br>Codeword 1 enabled | |
|---|---|---|---|
| Value | Message | Value | Message |
| 0 | 1 layer, port 0 | 0 | 5 layer, port 0-4 (SU) |
| 1 | 1 layer, port 1 | 1 | 6 layer, port 0-5 (SU) |
| 2 | 1 layer, port 2 | | |

(continued)

| One Codeword (≤ 4 layers): Codeword 0 enabled, Codeword 1 disabled | | Two Codewords (> 4 layers): Codeword 0 enabled, Codeword 1 enabled | |
|---|---|---|---|
| Value | Message | Value | Message |
| 3 | 1 layer, port 3 | | |
| 4 | 1 layer, port 4 | | |
| 5 | 1 layer, port 5 | | |
| 6 | 2 layer, port 0-1 | | |
| 7 | 2 layer, port 2-3 | | |
| 8 | 2 layer, port 4-5 | | |
| 9 | 3 layer, port 0-2 | | |
| 10 | 3 layer, port 3-5 | | |
| 11 | 4 layer, port 0-3 | | |
| 12 | Reserved | | |
| ... | ... | | |
| 15 | Reserved | | |

In Table 3, "One Codeword" indicates one codeword, "Two Codewords" indicates two codewords, "Codeword 0 enabled" indicates that a codeword 0 can be used, "Codeword 1 disabled" indicates that a codeword 1 cannot be used, and other information in Table 3 may be understood with reference to explanations of the parts in Table 1 and Table 2.

Certainly, content in Table 1 to Table 3 is described merely by using an example in which the maximum quantity of layers is 6. Actually, the maximum quantity of transport layers is not limited in this embodiment of this application. The idea of this application can be used regardless of the quantity of transport layers. In other words, the length of the second field may be determined based on the quantity of TBs, and the quantity of the third fields may be determined based on the quantity of TBs.

The first field, the second field, and the third field may appear consecutively or may not appear consecutively in the control information; or may appear in any order.

When the first field indicates that the quantity of transport blocks is 1, the control information does not include a $2^{nd}$ third field; or when the first field indicates that the quantity of transport blocks is 2, the control information includes a $2^{nd}$ third field.

In the solution provided in this embodiment of this application, when there is one transport block:
when the first field indicates that there is one transport block, a length of the first field is one bit, the length of the second field is four bits, the quantity of the third fields is 1 (that is, there is no $2^{nd}$ third field), and a length of the third field is eight bits, where a total length of the three fields is 1 + 4 + 8 = 13 bits.

When the first field indicates that there are two transport blocks, in this case, a length of the first field is one bit, the length of the second field is one bit, the quantity of the third fields is 2, and a length of the third field is $2 \times 8 = 16$ bits, where a total length of the three fields is 1 + 1 + 16 = 18 bits.

Therefore, a maximum total length of the three fields is 18 bits, and overheads of 18 bits need to be occupied in the DCI signaling. Compared with signaling overheads of 20 bits in the prior art, signaling overheads of 2 bits are saved. Most of all, in the solution provided in this embodiment of this application, the length of the second field and the quantity of the third fields are flexibly determined based on a TB requirement.

The description herein is made by using only the six-layer transport layer as an example. Actually, a length of the antenna port configuration information varies greatly as the quantity of transport blocks varies. The length of the second field can be flexibly determined based on the quantity of transport blocks, and signaling overheads can be reduced in many scenarios.

The length of the second field in the foregoing description may be determined based on the quantity of TBs. Actually, this application is not limited to determining the length of the second field based on the quantity of TBs. On basis of the first field, the length of the second field is alternatively determined with reference to a higher layer parameter.

The higher layer parameter may be transmitted by using radio resource control (English full name: Radio Resource Control, RRC for short) signaling.

For example, in a scenario where a maximum quantity of transport layers is 6, if the first field indicates that the quantity of transport blocks is 1 and a value of the higher layer parameter is a preset value, for example, when the preset value is not zero, the length of the second field may be determined according to Table 1. If the first field indicates that the quantity of transport blocks is 1 and the value of the higher layer parameter is another preset value, for example, when the another preset value is zero, the length of the second field may be determined according to Table 4.

**Table 4 Antenna port and a quantity of layers for one codeword (3 bits)**

| Value | Message |
|---|---|
| 0 | 1 layer, port 0 |
| 1 | 1 layer, port 1 |
| 2 | 1 layer, port 2 |
| 3 | 1 layer, port 3 |
| 4 | 2 layer, port 0-1 |
| 5 | 2 layer, port 2-3 |
| 6 | 3 layer, port 0-2 |
| 7 | 4 layer, port 0-3 |

A meaning of each parameter in Table 4 may be understood with reference to explanations of the parts in Table 1 and Table 2.

In another example, the length of the second field may alternatively be determined based on the quantity of transport blocks, the higher layer parameter, and a preset formula.

For example, the length of the second field is determined by the following formula:

$$\text{Length of the second field} = 3 - 2N_{\text{TB}} + Q;$$

where

$N_{\text{TB}}$ is the quantity of transport blocks, and $Q$ is the higher layer parameter.

In another example, the length of the second field may alternatively be determined by an indicator *flag _ TB* of the quantity of transport blocks:

$$\text{Length of the second field} = 5 - 2\,flag\_TB + Q,$$

where

*flag _ TB* is an identifier of the indicator of the quantity of transport blocks, and $Q$ is the higher layer parameter.

Certainly, the foregoing two formulas are only examples, and the length of the second field may alternatively be determined by a formula in another form.

In another example, the length of the second field may alternatively be determined based on a quantity of codewords, the higher layer parameter, and a preset table.

The preset table may be understood with reference to Table 5.

**Table 5 Table of mapping between the higher layer parameter and the length of the second field**

| One codeword (One codeword) | | Two codewords (Two codewords) | |
|---|---|---|---|
| dmrs-table-index | $N_b$ | dmrs-table-index | $N_b$ |
| 0 | 5 | 0 | 2 |
| 1 | 7 | 1 | 1 |
| 2 | 4 | 2 | 0 |

(continued)

| One codeword (One codeword) | | Two codewords (Two codewords) | |
|---|---|---|---|
| dmrs-table-index | $N_b$ | dmrs-table-index | $N_b$ |
| 3 | 3 | 3 | Reserved |

In Table 5, dmrs-table-index is the higher layer parameter, and $N_b$ is the length of the second field. It may be learned from Table 5 that, according to the case of one codeword or two codewords, the length $N_b$ of the second field may be determined based on a value of the higher layer parameter. The rest parameters in Table 5 may be understood with reference to explanations of the parts in Table 1 and Table 2.

In Table 5, "Reserved" indicates a reserved value, which is currently not defined and may be redefined based on a use requirement. When $N_b$ = 0, the length of the second field is zero, that is, the second field is not transmitted in the signaling.

In another example, the length of the second field may alternatively be determined based on the quantity of codewords, a DMRS pattern configuration parameter dmrs-pattern, and a higher layer parameter dmrs-tableAlt by using another preset table.

The another preset table may be understood with reference to Table 6.

**Table 6 Table of mapping between the higher layer parameter and the length of the second field under different pattern configuration parameters**

| dmrs-pattern = 0 | | | | dmrs-pattern = 1 | | | |
|---|---|---|---|---|---|---|---|
| One codeword | | Two codewords | | One codeword | | Two codewords | |
| dmrs-tableAlt | $N_b$ | dmrs-tableAlt | $N_b$ | dmrs-tableAlt | $N_b$ | dmrs-tableAlt | $N_b$ |
| 0 | 7 | 0 | 3 | 0 | 4 | 0 | 1 |
| 1 | 6 | 1 | 2 | 1 | 3 | 1 | 0 |
| 2 | 5 | 2 | 1 | - | - | - | - |
| 3 | 4 | 3 | 0 | - | - | - | - |

In Table 6, dmrs-table-index is the pattern configuration parameter, dmrs-tableAlt is the higher layer parameter, and $N_b$ is the length of the second field. It may be learned from Table 6 that the length $N_b$ of the second field may be determined based on a value of the higher layer parameter along with the pattern configuration parameter and the case of one codeword or two codewords.

In Table 6, "-" indicates Undefined. In this example, a value range of the higher layer parameter dmrs-tableAlt depends on a configuration of the pattern configuration parameter dmrs-pattern. When dmrs-pattern = 0, there are four values for dmrs-tableAlt, and they can be indicated by using two bits. When dmrs-pattern = 1, there are two values for dmrs-tableAlt, and they can be indicated by using one bit.

A table used for determining the length of the second field may be a table such as Table 6, or may be two tables corresponding to dmrs-pattern = 0 and dmrs-pattern = 1 respectively, or may be two tables corresponding to one codeword and two codewords respectively, or may be four tables corresponding to dmrs-pattern = 0 with one codeword, dmrs-pattern = 0 with two codewords, dmrs-pattern = 1 with one codeword, and dmrs-pattern = 1 with two codewords respectively, or may be a plurality of tables corresponding to values of other parameters, for example, a table of dmrs-pattern = 0 with one codeword and dmrs-pattern = 0 with two codewords shown in Table 7, and a table of dmrs-pattern = 1 with one codeword and dmrs-pattern = 1 with two codewords shown in Table 8.

**Table 7 Table of mapping between the higher layer parameter and the length of the second field (dmrs-pattern = 0)**

| One codeword | | Two codewords | |
|---|---|---|---|
| dmrs-tableAlt | $N_b$ | dmrs-tableAlt | $N_b$ |
| 0 | 7 | 0 | 3 |

(continued)

| One codeword | | Two codewords | |
|---|---|---|---|
| dmrs-tableAlt | $N_b$ | dmrs-tableAlt | $N_b$ |
| 1 | 6 | 1 | 2 |
| 2 | 5 | 2 | 1 |
| 3 | 4 | 3 | 0 |

**Table 8 Table of mapping between the higher layer parameter and the length of the second field (dmrs-pattern = 1)**

| One codeword | | Two codewords | |
|---|---|---|---|
| dmrs-tableAlt | $N_b$ | dmrs-tableAlt | $N_b$ |
| 0 | 4 | 0 | 1 |
| 1 | 3 | 1 | 0 |

In this embodiment of this application, when the first field indicates that the quantity of transport blocks is 1, the control information further includes a fourth field, where information in the fourth field is used to indicate a codeword used during data transmission, and the codeword is a representation form of the transport block in a physical layer.

For example, for a one-codeword transmission case, a channel corresponding to a codeword 1 may be selected, or a channel corresponding to a codeword 2 may be selected. A channel condition corresponding to the codeword 1 and a channel condition corresponding to the codeword 2 both vary differently with time. Sometimes the channel condition of the codeword 1 is better, and sometimes the channel condition of the codeword 2 is better. With this method, a codeword with a relatively good channel condition may be selected to transmit one transport block, thereby improving data transmission efficiency.

The information in the fourth field may be understood with reference to Table 9.

**Table 9 Mapping between a transport block and a codeword**

| Codeword indicator | Codeword |
|---|---|
| 0 | Codeword 1 |
| 1 | Codeword 2 |

When codeword indicator (Codeword indicator) information in the fourth field is 0, it is determined that a codeword 1 is selected for data transmission, or when codeword indicator (Codeword indicator) information in the fourth field is 1, it is determined that a codeword 2 is selected for data transmission. Certainly, the mapping relationship may be adjusted, and is not limited to a manner in Table 9.

In the case of one-codeword transmission, when the codeword 1 is selected, the control information only needs to include a 1st third field, and may not include a 2nd third field; or when the codeword 2 is selected, the control information only needs to include a 2nd third field, and may not include a 1st third field.

When a length of an antenna port configuration varies greatly with different quantities of codewords, the technical solution of this application can effectively reduce signaling overheads. On the contrary, when the length of the antenna port configuration varies slightly with different quantities of codewords, the first field is introduced into scheduling signaling and then signaling overheads are not necessarily reduced.

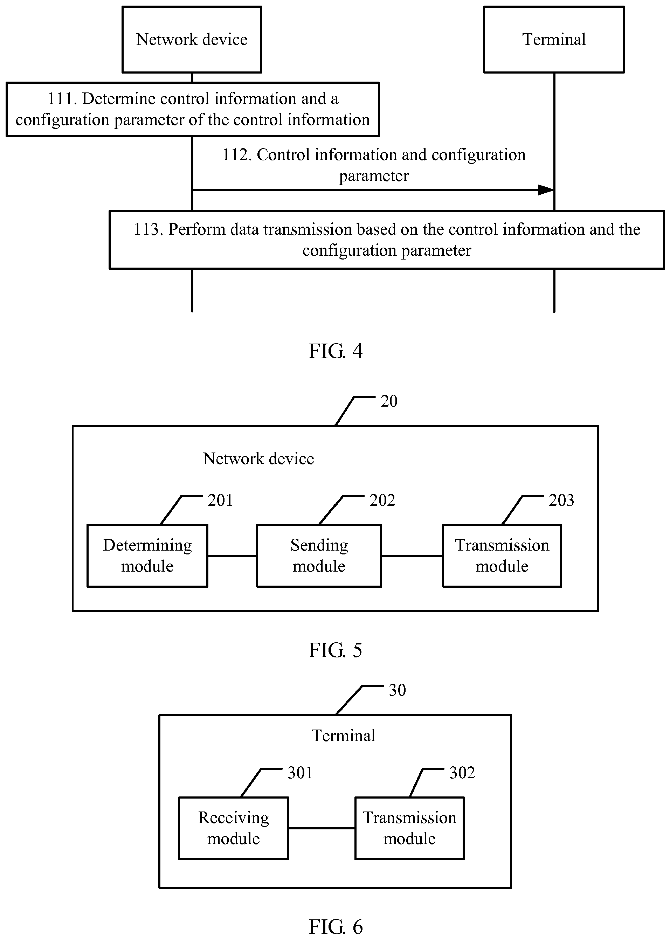

Given this, as shown in FIG. 4, another embodiment of this application provides a data transmission method, including the following steps.

111. A network device determines control information and a configuration parameter of the control information, where the configuration parameter is used to configure a format of the control information.

When a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or

when a value of the configuration parameter is a second configuration value, the control information includes a second field and at least one third field, where a length of the second field and a quantity of the third fields are related to the format.

The length of the second field is related to the quantity of transport blocks, that is, the length of the second field may be determined based on the quantity of transport blocks.

The quantity of the third fields is related to the quantity of transport blocks, that is, the quantity of the third fields may be determined based on the quantity of transport blocks.

The format may also be referred to as a structure.

112. The network device sends the control information and the configuration parameter to a terminal.

113. The network device performs data transmission with the terminal based on the control information and the configuration parameter.

This embodiment of this application provides a scheme for switching on or off the first field. In other words, the first field is conditionally enabled, helping to ensure that a signaling length optimization effect can be obtained under different conditions.

Whether scheduling signaling includes the first field is determined based on a configuration parameter (for example, a parameter carried in RRC signaling) flag-TB-number-indication:

when the network device does not configure the format of the control information, that is, the configuration parameter flag-TB-number-indication is not set for the format of the control information, or when the network device has set the configuration parameter and the value of the configuration parameter is set to a preset value, for example, the preset value is 0, the first field is not included and the length of the second field and the quantity of the third fields may be determined based on the configuration parameter in this format; or
when the value of the configuration parameter flag-TB-number-indication is greater than 0, the scheduling signaling includes the first field and then the quantity of transport blocks may be determined directly based on an indicator of the first field.

The foregoing description is an example of one codeword or two codewords. Actually, this embodiment of this application is also applicable to a case of a plurality of codewords. For example, a length of the first field may be 2, and a correspondence between a value of the first field and a quantity of transport blocks may be understood with reference to Table 10.

**Table 10 Mapping relationship of the first field for a plurality of codewords**

| TB number indicator | Number of Transport Blocks |
| --- | --- |
| 00 | 1 |
| 01 | 2 |
| 10 | 3 |
| 11 | Reserved |

"TB number indicator" is an indicator of a quantity of transport blocks, and "Number of Transport Blocks" is the quantity of transport blocks. When the first field indicates that the quantity of transport blocks is 1, the signaling does not include a 2nd third field and a 3rd third field; or when the first field indicates that the quantity of transport blocks is 2, the signaling does not include a 3rd third field.

Meanings of relevant parameters in Table 1 to Table 10 may be understood by mutual reference to each other, and a meaning of a same parameter in different tables is the same.

The foregoing describes the data transmission method in the embodiments of this application. The following describes a network device and a terminal in the embodiments of this application with reference to the accompanying drawings.

As shown in FIG. 5, an embodiment of this application provides a network device 20, including:

a determining module 201, configured to determine control information, where the control information includes a first field, a second field, and at least one third field; the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks;
a sending module 202, configured to send the control information determined by the determining module 201 to a terminal; and

a transmission module 203, configured to perform data transmission with the terminal based on the control information sent by the sending module 202.

In another solution, alternatively the network device 20 may include: a determining module 201, configured to determine control information and a configuration parameter of the control information, where the configuration parameter is used to configure a format of the control information; and

when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or

when a value of the configuration parameter is a second configuration value, the control information includes a second field and at least one third field, where a length of the second field and a quantity of the third fields are related to the format; a sending module 202, configured to send the control information and the configuration parameter of the control information format that are determined by the determining module 201 to the terminal; and

a transmission module 203, configured to perform data transmission with the terminal based on the control information sent by the sending module 202.

Optionally, when the quantity of transport blocks indicated by the first field is a first value, the length of the second field is a first length and the quantity of the third fields is the first value; or

when the quantity of transport blocks indicated by the first field is a second value, the length of the second field is less than the first length and the quantity of the third fields is the second value, where the second value is greater than the first value.

Optionally, the determining module 201 is further configured to determine a value of a higher layer parameter, where the value of the higher layer parameter and the first field are used to determine the length of the second field; and the sending module 202 is further configured to send a higher layer message to the terminal, where the higher layer message is used to indicate the value of the higher layer parameter.

When the first field indicates that the quantity of transport blocks is 1, the control information further includes a fourth field, where information in the fourth field is used to indicate a codeword used during data transmission, and the codeword is a representation form of the transport block in a physical layer.

Optionally, the determining module 201 is further configured to determine whether the format of the control information is configured; where if the format of the control information is not configured or if the format of the control information is configured and the value of the configuration parameter is set to a preset value, the first field is null and the configuration parameter is used to configure the format of the control information.

As shown in FIG. 6, an embodiment of this application provides a terminal, including:

a receiving module 301, configured to receive control information sent by a network device, where the control information includes a first field, a second field, and at least one third field; the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; and

a transmission module 302, configured to perform data transmission with the network device based on the control information.

In another solution, alternatively the terminal may include:

a receiving module 301, configured to receive control information and a configuration parameter of the control information that are sent by a network device, where the configuration parameter is used to configure a format of the control information; and

when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or

when a value of the configuration parameter is a second configuration value, the control information includes a second field and at least one third field, where a length of the second field and a quantity of the third fields are related to the format; and

a transmission module 302, configured to perform data transmission with the network device based on the control information.

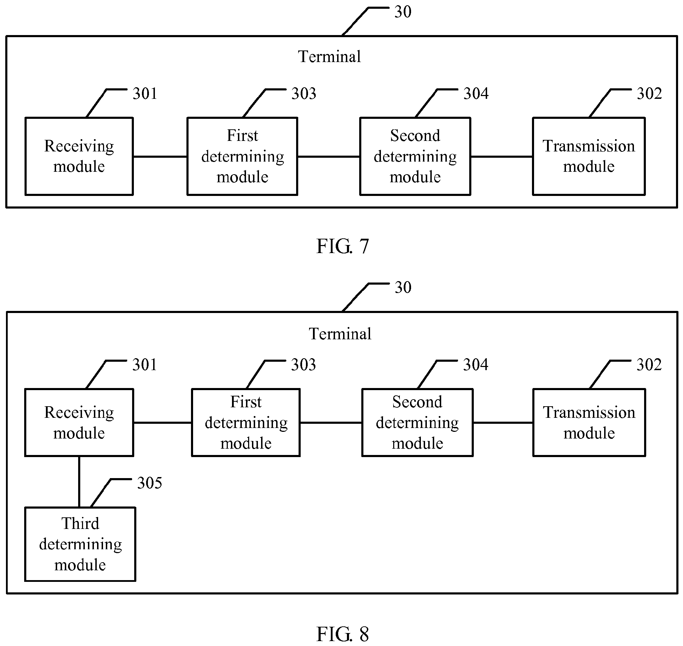

Optionally, as shown in FIG. 7, another embodiment of this application provides a terminal, further including:

a first determining module 303, configured to determine the length of the second field and the quantity of the third fields respectively based on the quantity of transport blocks; and

a second determining module 304, configured to determine antenna port configuration information of the to-be-transmitted transport block from the second field based on the length of the second field, and determine the configuration information of the to-be-transmitted transport block from the third field based on the quantity of the third fields.

The transmission module 302 is specifically configured to perform data transmission based on the quantity of transport blocks, the antenna port configuration information, and the configuration information.

Optionally, when the quantity of transport blocks indicated by the first field is a first value, the length of the second field is a first length and the quantity of the third fields is the first value; or

when the quantity of transport blocks indicated by the first field is a second value, the length of the second field is less than the first length and the quantity of the third fields is the second value, where the second value is greater than the first value.

Optionally, the receiving module 301 is configured to receive a higher layer message sent by the network device, where the higher layer message is used to indicate a value of a higher layer parameter, and the value of the higher layer parameter and the first field are used to determine the length of the second field.

Optionally, when the first field indicates that the quantity of transport blocks is 1, the control information further includes a fourth field, where information in the fourth field is used to indicate a codeword used during data transmission, and the codeword is a representation form of the transport block in a physical layer; and

the transmission module 302 is specifically configured to perform data transmission by using the codeword indicated by the information in the fourth field.

Optionally, as shown in FIG. 8, another embodiment of this application provides a terminal, further including a third determining module 305.

The third determining module 305 is configured to: when a configuration parameter corresponding to a format of the control information is not received within a preset time or a received configuration parameter is a preset value, determine that the first field is null.

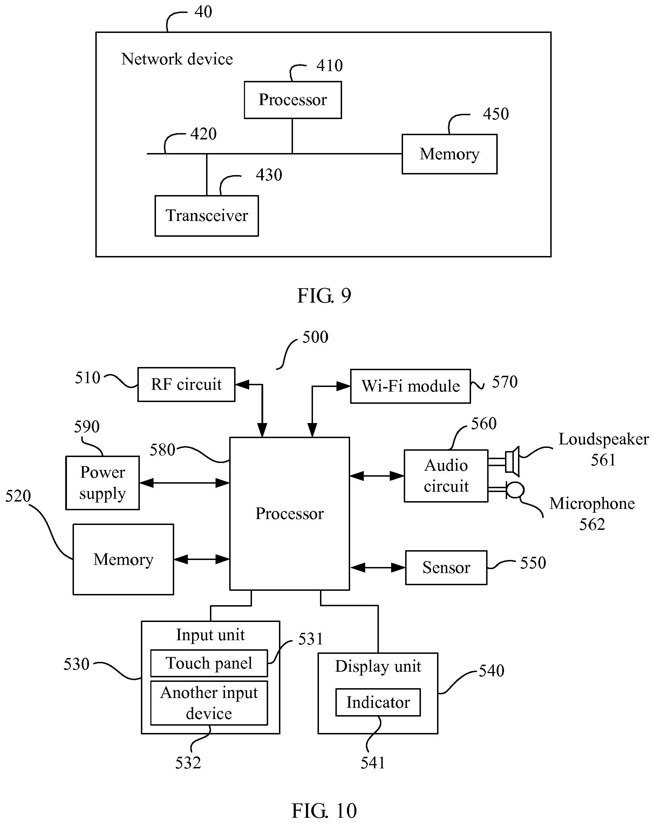

FIG. 9 is a schematic structural diagram of a network device 40 according to an embodiment of this application. The network device 40 includes a processor 410, a memory 450, and a transceiver 430. The memory 450 may include a read-only memory and a random access memory, and provides an operation instruction and data to the processor 410. A part of the memory 450 may further include a non-volatile random access memory (NVRAM).

In some implementations, the memory 450 stores the following elements: an executable module or a data structure, or a subset thereof, or an extended set thereof.

In this embodiment of this application, a corresponding operation is performed by invoking an operation instruction stored in the memory 450 (where the operation instruction may be stored in an operating system).

The processor 410 controls operations of the network device 40, and the processor 410 may also be referred to as a CPU (Central Processing Unit, central processing unit). The memory 450 may include a read-only memory and a random access memory, and provides an instruction and data to the processor 410. A part of the memory 450 may further include a non-volatile random access memory (NVRAM). In specific application, components of CPE40 are coupled together by using a bus system 420. In addition to a data bus, the bus system 420 may further include a power bus, a control bus, a status signal bus, or the like. However, for clear description, various types of buses in the figure are denoted as the bus system 420.

The methods disclosed in the foregoing embodiments of this application may be applied to the processor 410, or implemented by the processor 410. The processor 410 may be an integrated circuit chip and has a signal processing capability. In an implementation process, steps in the foregoing methods can be implemented by using a hardware integrated logical circuit in the processor 410, or by using an instruction in a form of software. The processor 410 may be a general purpose processor, a digital signal processor (DSP), an application-specific integrated circuit (ASIC), a field programmable gate array (FPGA) or another programmable logic device, a discrete gate or a transistor logic device, or a discrete hardware component, to implement or perform the methods, steps, and logical block diagrams disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 450, and the processor 410 reads information in the memory 450, and completes the following steps in combination with hardware of the processor 410:

the processor 410 is configured to determine control information, where the control information includes a first field, a second field, and at least one third field; the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks;

the transceiver 430 is configured to send the control information to a terminal; and

the processor 410 controls the transceiver 430 to perform data transmission based on the control information with the terminal.

Optionally, when the quantity of transport blocks indicated by the first field is a first value, the length of the second field is a first length and the quantity of the third fields is the first value; or

when the quantity of transport blocks indicated by the first field is a second value, the length of the second field is less than the first length and the quantity of the third fields is the second value, where the second value is greater than the first value.

Optionally, the processor 410 is further configured to determine a value of a higher layer parameter, where the value of the higher layer parameter and the first field are used to determine the length of the second field; and

the transceiver 430 is further configured to send a higher layer message to the terminal, where the higher layer message is used to indicate the value of the higher layer parameter.

Optionally, when the first field indicates that the quantity of transport blocks is 1, the control information further includes a fourth field, where information in the fourth field is used to indicate a codeword used during data transmission, and the codeword is a representation form of the transport block in a physical layer.

Optionally, the processor 410 is further configured to determine whether the format of the control information is configured; where if the format of the control information is not configured or if the format of the control information is configured and the value of the configuration parameter is set to a preset value, the first field is null and the configuration parameter is used to configure the format of the control information.

In another solution of the network device, the processor 410 and the transceiver 430 of the network device are configured to perform the following functions:

the processor 410 is configured to determine control information and a configuration parameter of the control information, where the configuration parameter is used to configure a format of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format;

the transceiver 430 is configured to send the control information and the configuration parameter to a terminal; and

the processor 410 controls the transceiver to perform data transmission based on the control information and the configuration parameter with the terminal.

Optionally, when the quantity of transport blocks indicated by the first field is a first value, the length of the second field is a first length and the quantity of the third fields is the first value; or

when the quantity of transport blocks indicated by the first field is a second value, the length of the second field is less than the first length and the quantity of the third fields is the second value, where the second value is greater than the first value.

Optionally, the processor 410 is further configured to determine a value of a higher layer parameter, where the value of the higher layer parameter and the first field are used to determine the length of the second field; and

the transceiver 430 is further configured to send a higher layer message to the terminal, where the higher layer message is used to indicate the value of the higher layer parameter.

Optionally, when the first field indicates that the quantity of transport blocks is 1, the control information further includes a fourth field, where information in the fourth field is used to indicate a codeword used during data transmission, and the codeword is a representation form of the transport block in a physical layer.

The foregoing description of the network device may also be understood with reference to related descriptions of the parts in FIG. 2 to FIG. 8, and details are not described herein again.

FIG. 10 is a block diagram of a part of a structure of a mobile terminal 500 according to an embodiment of this application. As shown in FIG. 10, the mobile terminal includes components, such as a radio frequency (English full name: Radio Frequency, RF for short) circuit 510, a memory 520, an input unit 530, a display unit 540, a sensor 550, an audio circuit 560, a Wi-Fi module 570, a processor 580, and a power supply 590. A person skilled in the art may understand that, the structure of the mobile terminal shown in FIG. 10 shall not be construed as any limitation on the mobile terminal, and may include more or less components than those shown in the figure, or some components may be combined, or a different component layout may be used.

The following describes each part of the mobile terminal in detail with reference to FIG. 10.

The RF circuit 510 may be configured to receive and send a signal in a message receiving or sending process or a call process, and in particular, after receiving downlink information of a base station, send the downlink information to the processor 580 for processing; and in addition, send uplink-related data to the base station. Generally, the RF circuit 510 includes but is not limited to: an antenna, at least one amplifier, a transceiver, a coupler, a low noise amplifier (English full name: Low Noise Amplifier, LNA for short), a duplexer, or the like. In addition, the RF circuit 510 may also communicate with a network and another device through radio communication. The radio communication may use any communications standard or protocol, including but not limited to: global system for mobile communications (English full name: Global System of Mobile communication, GSM for short), general packet radio service (English full name: General Packet Radio Service, GPRS for short), code division multiple access (English full name: Code Division Multiple Access, CDMA for short), wideband code division multiple access (English full name: Wideband Code Division Multiple Access, WCDMA for short), long term evolution (English full name: Long Term Evolution, LTE for short), e-mail, short message service (English full name: Short Messaging Service, SMS for short), or the like.

The memory 520 may be configured to store a software program and a software module, and the processor 580 executes various functional applications of the mobile terminal and performs data processing by running the software program and the software module that are stored in the memory 520. The memory 520 may mainly include a program storage area and a data storage area, where the program storage area may store an operating system, at least one application required by a function (such as an audio play function or a video play function), and the like; and the data storage area may store data (such as audio data, or a phonebook) created according to use of the mobile terminal, and the like. In addition, the memory 520 may include a high-speed random access memory, and may further include a non-volatile memory, for example, at least one magnetic disk storage device, a flash memory, or another volatile solid-state storage device.

The input unit 530 may be configured to receive an operation instruction from a user, such as answering or rejecting a call, and generate a key signal input related to user setting and function control of the mobile terminal 500. Specifically, the input unit 530 may include a touch panel 531 and another input device 532. The touch panel 531 is also referred to as a touchscreen and can collect a touch operation (such as an operation performed by a user on the touch panel 531 or nearby the touch panel 531 by using a finger or any proper object or accessory such as a stylus) on or nearby the touch panel 531, and drive the corresponding mobile terminal according to a preset program. Optionally, the touch panel 531 may include two parts: a touch detection mobile terminal and a touch controller. The touch detection mobile terminal detects a touch orientation of the user, detects a signal brought by the touch operation, and sends the signal to the touch controller. The touch controller receives touch information from the touch detection mobile terminal, converts the touch information into touch coordinates, and sends the touch coordinates to the processor 580. In addition, the touch controller can receive a command sent by the processor 580, and execute the command. In addition, the touch panel 531 may be implemented in a plurality of types, such as a resistor type, a capacitor type, an infrared type, or a surface acoustic wave type. The input unit 530 may include the another input device 532 in addition to the touch panel 531. Specifically, the another input device 532 may include but is not limited to one or more of the following: a physical keypad, a function key (such as a volume control key or a switch key), a trackball, a mouse, a joystick, or the like.

The display unit 540 may be configured to display alarm prompt information. The display unit 540 may include an indicator 541. Optionally, the indicator 541 may be configured in a form of a liquid crystal display (Liquid Crystal Display, LCD), an organic light-emitting diode (Organic Light-Emitting Diode, OLED), or the like. Further, the touch panel 531 may cover the indicator 541. When detecting a touch operation on or nearby the touch panel 531, the touch panel 531 transmits the touch operation to the processor 580 to determine a type of a touch event, and then the processor 580 provides a corresponding visual output on the indicator 541 based on the type of the touch event. Although the touch panel 531 and the indicator 541 in FIG. 10 are used as two independent components to implement input and input functions of the mobile terminal, in some embodiments, the touch panel 531 and the indicator 541 may be integrated to implement the input and output functions of the mobile terminal.

The mobile terminal 500 may further include at least one sensor 550.

The audio circuit 560, a loudspeaker 561, and a microphone 562 may provide an audio interface between a user and the mobile terminal. The audio circuit 560 may transmit, to the loudspeaker 561, an electrical signal converted from received audio data, and the loudspeaker 561 converts the electrical signal into a sound signal for outputting. In another aspect, the microphone 562 converts a collected sound signal into an electrical signal, the audio circuit 560 converts the electrical signal into audio data after receiving the electrical signal and outputs the audio data to the processor 580 for processing, and then the audio data is sent to, for example, another mobile terminal, after passing through a camera 510, or the audio data is output to the memory 520 for further processing.

The Wi-Fi module 570 may be configured to perform communication.

The processor 580 is a control center of the mobile terminal, uses various interfaces and lines to connect various parts of the entire mobile terminal, and executes various functions of the mobile terminal and processes data by running or executing a software program and/or module that are/is stored in the memory 520 and by invoking data stored in the memory 520, to perform overall monitoring on the mobile terminal. Optionally, the processor 580 may include one or more processing units. Preferably, an application processor and a modem processor may be integrated into the processor 580, where the application processor mainly handles an operating system, a user interface, an application, and the like; and the modem processor mainly handles radio communication. It may be understood that, the modem processor may not be necessarily integrated into the processor 580.

The mobile terminal 500 further includes the power supply 590 (for example, a battery) that supplies power to each component. Preferably, the power supply may be logically connected to the processor 580 by using a power supply management system, so that functions such as charging management, discharging management, and power consumption management are implemented by using the power supply management system.

Although not shown, the mobile terminal 500 may further include a Bluetooth module or the like. Details are not described herein again.

In this embodiment of this application, the RF circuit 510 is equivalent to a transceiver, and the RF circuit 510 and the processor 580 perform the following functions in a data transmission process according to this application:

The RF circuit 510 is configured to receive control information sent by a network device, where the control information includes a first field, a second field, and at least one third field; the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; and the processor 580 controls the transceiver to perform data transmission based on the control information with the network device.

Optionally, the processor 580 is further configured to:

determine the length of the second field and the quantity of the third fields respectively based on the quantity of transport blocks; and determine antenna port configuration information of the to-be-transmitted transport block from the second field based on the length of the second field; and determine the configuration information of the to-be-transmitted transport block from the third field based on the quantity of the third fields.

The RF circuit 510 is specifically configured to perform data transmission with the network device based on the quantity of transport blocks, the antenna port configuration information, and the configuration information of the transport block.

Optionally, when the quantity of transport blocks indicated by the first field is a first value, the length of the second field is a first length and the quantity of the third fields is the first value; or when the quantity of transport blocks indicated by the first field is a second value, the length of the second field is less than the first length and the quantity of the third fields is the second value, where the second value is greater than the first value.

Optionally, the RF circuit 510 is further configured to receive a higher layer message sent by the terminal, where the higher layer message is used to indicate a value of a higher layer parameter, and the value of the higher layer parameter and the first field are used to determine the length of the second field.

Optionally, the processor 580 is further configured to: when the transceiver does not receive a configuration parameter corresponding to a format of the control information within a preset time or a received configuration parameter is a preset value, determine that the first field is null.

In another solution of the terminal, the processor 580 and the RF circuit 510 of the terminal are configured to perform the following functions:

The RF circuit 510 is configured to receive control information and a configuration parameter of the control information that are sent by a network device, where the configuration parameter is used to configure a format of the control information; and when a value of the configuration parameter is a first configuration value, the control information includes a first field, a second field, and at least one third field, where the first field is used to indicate a quantity of to-be-transmitted transport blocks; the second field includes antenna port configuration information, and a length of the second field is related to the quantity of transport blocks; and the third field includes configuration information of the transport block, and a quantity of the third fields is related to the quantity of transport blocks; or when a value of the configuration parameter is a second configuration value, the control information includes a second field and at least one third field, where a length of the second field and a quantity of the third fields are related to the format; and the processor 580 controls the RF circuit 510 to perform data transmission based on the control information and the configuration parameter with the network device.

Optionally, the processor 580 is further configured to:

determine the length of the second field and the quantity of the third fields respectively based on the quantity of transport blocks; and
determine antenna port configuration information of the to-be-transmitted transport block from the second field based on the length of the second field, and determine the configuration information of the to-be-transmitted transport block from the third field based on the quantity of the third fields.

The RF circuit 510 is specifically configured to perform data transmission with the network device based on the quantity of transport blocks, the antenna port configuration information, and the configuration information of the transport block.

Optionally, when the quantity of transport blocks indicated by the first field is a first value, the length of the second field is a first length and the quantity of the third fields is the first value; or
when the quantity of transport blocks indicated by the first field is a second value, the length of the second field is less than the first length and the quantity of the third fields is the second value, where the second value is greater than the first value.

Optionally, the RF circuit 510 is further configured to receive a higher layer message sent by the terminal, where the higher layer message is used to indicate a value of a higher layer parameter, and the value of the higher layer parameter and the first field are used to determine the length of the second field.

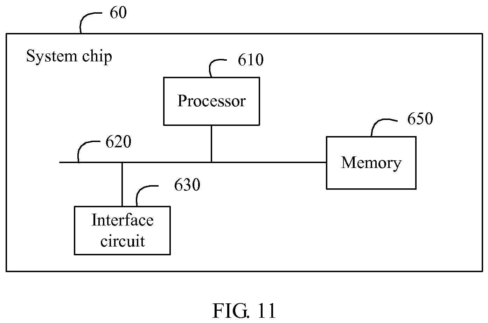

FIG. 11 is a schematic structural diagram of a system chip 60 according to an embodiment of this application. The system chip 60 includes at least one processor 610, a memory 650, and an interface circuit 630. The at least one processor 610, the memory 650, and the interface circuit 630 are interconnected by using a bus. The memory 650 may include a read-only memory and a random access memory, and provides an operation instruction and data to the processor 610. A part of the memory 650 may further include a non-volatile random access memory (NVRAM).

In some implementations, the memory 650 stores the following elements: an executable module or a data structure, or a subset thereof, or an extended set thereof.

In this embodiment of this application, a corresponding operation is performed by invoking an operation instruction stored in the memory 650 (where the operation instruction may be stored in an operating system).

The processor 610 controls operations of a network device or a terminal, and the processor 610 may also be referred to as a CPU (Central Processing Unit, central processing unit). The memory 650 may include a read-only memory and a random access memory, and provides an instruction and data to the processor 610. A part of the memory 650 may further include a non-volatile random access memory (NVRAM). In specific application, components of CPE140 are coupled together by using a bus system 620. In addition to a data bus, the bus system 620 may further include a power bus, a control bus, a status signal bus, or the like. However, for clear description, various types of buses in the figure are denoted as the bus system 620.

The methods disclosed in the foregoing embodiments of this application may be applied to the processor 610, or implemented by the processor 610. The processor 610 may be an integrated circuit chip and has a signal processing capability. In an implementation process, steps in the foregoing methods can be implemented by using a hardware integrated logical circuit in the processor 610, or by using an instruction in a form of software. The processor 610 may be a general purpose processor, a digital signal processor (DSP), an application-specific integrated circuit (ASIC), a field programmable gate array (FPGA) or another programmable logic device, a discrete gate or a transistor logic device, or a discrete hardware component, to implement or perform the methods, steps, and logical block diagrams disclosed in the embodiments of this application. The general purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 650, and the processor 610 reads information in the memory 650 and completes the steps in the foregoing methods in combination with hardware of the processor 610.

Optionally, the interface circuit 630 is configured to perform steps of receiving or sending a message and transmitting data by the transceiver 430 in FIG. 9, or steps of receiving or sending a message and transmitting data by the RF circuit 510 in FIG. 10.

The processor 610 is configured to perform steps of determining information or a parameter by the processor 410 in FIG. 9, or steps of determining information or a parameter by the processor 580 in FIG. 10.

All or some of the foregoing embodiments may be implemented by using software, hardware, firmware, or any combination thereof. When the software is used to implement the embodiments, the embodiments each may be implemented completely or partially in a form of a computer program product. The computer program product includes one or more computer instructions. When the computer instruction is loaded and executed on a computer, some or all of the processes or functions according to the embodiments of this application are generated. The computer may be a general purpose computer, a special purpose computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center that is integrated by using one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person of ordinary skill in the art may understand that all or some of the steps of the methods in the foregoing embodiments may be implemented by a program instructing relevant hardware. The program may be stored in a computer-readable storage medium. The storage medium may include: a ROM, a RAM, a magnetic disk, an optical disc, or the like.

The foregoing describes the data transmission method, device, and system provided in the embodiments of this application in detail. The principles and implementations of this application are described herein by using specific examples. The description about the embodiments of this application is merely provided to help understand the method and core ideas of this application. In addition, a person of ordinary skill in the art may make variations and modifications to this application in terms of the specific implementations and application scope according to the ideas of this application. Therefore, the content of this specification shall not be construed as a limitation on this application.

**Claims**

1.  A data transmission method, comprising:

    determining, by a network device, control information, wherein the control information comprises a first field, a second field, and at least one third field; the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks;
    sending, by the network device, the control information to a terminal; and
    performing, by the network device, data transmission with the terminal based on the control information.

2.  A data transmission method, comprising:

    determining, by a network device, control information and a configuration parameter of the control information, wherein the configuration parameter is used to configure a format of the control information; and
    when a value of the configuration parameter is a first configuration value, the control information comprises a first field, a second field, and at least one third field, wherein the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; or
    when a value of the configuration parameter is a second configuration value, the control information comprises a second field and at least one third field, wherein a length of the second field and a quantity of the third fields are related to the format;
    sending, by the network device, the control information and the configuration parameter to a terminal; and
    performing, by the network device, data transmission with the terminal based on the control information and the configuration parameter.

3. The method according to claim 1 or 2, wherein
when the quantity of transport blocks indicated by the first field is a first value, the length of the second field is a first length and the quantity of the third fields is the first value; or
when the quantity of transport blocks indicated by the first field is a second value, the length of the second field is less than the first length and the quantity of the third fields is the second value, wherein the second value is greater than the first value.

4. The method according to any one of claims 1 to 3, wherein the method further comprises:

   determining, by the network device, a value of a higher layer parameter, wherein the value of the higher layer parameter and the first field are used to determine the length of the second field; and
   sending, by the network device, a higher layer message to the terminal, wherein the higher layer message is used to indicate the value of the higher layer parameter.

5. The method according to any one of claims 1 to 4, wherein when the first field indicates that the quantity of transport blocks is 1, the control information further comprises a fourth field, information in the fourth field is used to indicate a codeword used during data transmission, and the codeword is a representation form of the transport block in a physical layer.

6. The method according to any one of claim 1 and claims 3 to 5, wherein the method further comprises:

   determining, by the network device, whether the format of the control information is configured; wherein
   if the format of the control information is not configured or if the format of the control information is configured and the value of the configuration parameter is set to a preset value, the first field is null and the configuration parameter is used to configure the format of the control information.

7. A data transmission method, comprising:

   receiving, by a terminal, control information sent by a network device, wherein the control information comprises a first field, a second field, and at least one third field; the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; and
   performing, by the terminal, data transmission with the network device based on the control information.

8. A data transmission method, comprising:

   receiving, by a terminal, control information and a configuration parameter of the control information that are sent by a network device, wherein the configuration parameter is used to configure a format of the control information; and
   when a value of the configuration parameter is a first configuration value, the control information comprises a first field, a second field, and at least one third field, wherein the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; or
   when a value of the configuration parameter is a second configuration value, the control information comprises a second field and at least one third field, wherein a length of the second field and a quantity of the third fields are related to the format; and
   performing, by the terminal, data transmission with the network device based on the control information and the configuration parameter.

9. The method according to claim 7 or 8, wherein the method further comprises:

   determining, by the terminal, the length of the second field and the quantity of the third fields respectively based on the quantity of transport blocks; and
   determining, by the terminal, antenna port configuration information of the to-be-transmitted transport block from the second field based on the length of the second field, and determining the configuration information of the to-be-transmitted transport block from the third field based on the quantity of the third fields; and

the performing, by the terminal, data transmission with the network device based on the control information comprises:

performing, by the terminal, data transmission with the network device based on the quantity of transport blocks, the antenna port configuration information, and the configuration information of the transport block.

10. The method according to any one of claims 7 to 9, wherein
when the quantity of transport blocks indicated by the first field is a first value, the length of the second field is a first length and the quantity of the third fields is the first value; or
when the quantity of transport blocks indicated by the first field is a second value, the length of the second field is less than the first length and the quantity of the third fields is the second value, wherein the second value is greater than the first value.

11. The method according to any one of claims 7 to 10, wherein the method further comprises:
receiving, by the terminal, a higher layer message sent by the network device, wherein the higher layer message is used to indicate a value of a higher layer parameter, and the value of the higher layer parameter and the first field are used to determine the length of the second field.

12. The method according to any one of claims 7 to 11, wherein when the first field indicates that the quantity of transport blocks is 1, the control information further comprises a fourth field, information in the fourth field is used to indicate a codeword used during data transmission, and the codeword is a representation form of the transport block in a physical layer; and
the terminal performs data transmission by using the codeword indicated by the information in the fourth field.

13. The method according to any one of claim 7 and claims 9 to 12, wherein the method further comprises:
when the terminal does not receive a configuration parameter corresponding to a format of the control information within a preset time or a received configuration parameter is a preset value, determining that the first field is null.

14. A network device, comprising: a processor and a transceiver, wherein the processor and the transceiver are interconnected by using a bus;
the processor is configured to determine control information, wherein the control information comprises a first field, a second field, and at least one third field; the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks;
the transceiver is configured to send the control information to a terminal; and
the processor controls the transceiver to perform data transmission based on the control information with the terminal.

15. A network device, comprising: a processor and a transceiver, wherein the processor and the transceiver are interconnected by using a bus;
the processor is configured to determine control information and a configuration parameter of the control information, wherein the configuration parameter is used to configure a format of the control information; and when a value of the configuration parameter is a first configuration value, the control information comprises a first field, a second field, and at least one third field, wherein the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; or when a value of the configuration parameter is a second configuration value, the control information comprises a second field and at least one third field, wherein a length of the second field and a quantity of the third fields are related to the format;
the transceiver is configured to send the control information and the configuration parameter to a terminal; and
the processor controls the transceiver to perform data transmission based on the control information and the configuration parameter with the terminal.

16. The network device according to claim 14 or 15, wherein
the processor is further configured to determine a value of a higher layer parameter, wherein the value of the higher layer parameter and the first field are used to determine the length of the second field; and
the transceiver is further configured to send a higher layer message to the terminal, wherein the higher layer message is used to indicate the value of the higher layer parameter.

**17.** The network device according to claim 14 or 16, wherein
the processor is further configured to determine whether the format of the control information is configured; wherein if the format of the control information is not configured or if the format of the control information is configured and the value of the configuration parameter is set to a preset value, the first field is null and the configuration parameter is used to configure the format of the control information.

**18.** A terminal, comprising: a transceiver and a processor, wherein the processor and the transceiver are interconnected by using a bus;
the transceiver is configured to receive control information sent by a network device, wherein the control information comprises a first field, a second field, and at least one third field; the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; and
the processor controls the transceiver to perform data transmission based on the control information with the network device.

**19.** A terminal, comprising: a transceiver and a processor, wherein the processor and the transceiver are interconnected by using a bus;
the transceiver is configured to receive control information and a configuration parameter of the control information that are sent by a network device, wherein the configuration parameter is used to configure a format of the control information; and when a value of the configuration parameter is a first configuration value, the control information comprises a first field, a second field, and at least one third field, wherein the first field is used to indicate a quantity of to-be-transmitted transport blocks; the second field comprises antenna port configuration information, and a length of the second field is related to the quantity of transport blocks; and the third field comprises configuration information of the transport block, and a quantity of the third fields is related to the quantity of transport blocks; or when a value of the configuration parameter is a second configuration value, the control information comprises a second field and at least one third field, wherein a length of the second field and a quantity of the third fields are related to the format; and
the processor controls the transceiver to perform data transmission based on the control information and the configuration parameter with the network device.

**20.** The terminal according to claim 18 or 19, wherein
the processor is further configured to:

determine the length of the second field and the quantity of the third fields respectively based on the quantity of transport blocks; and
determine antenna port configuration information of the to-be-transmitted transport block from the second field based on the length of the second field, and determine the configuration information of the to-be-transmitted transport block from the third field based on the quantity of the third fields; and
the transceiver is specifically configured to perform data transmission with the network device based on the quantity of transport blocks, the antenna port configuration information, and the configuration information of the transport block.

**21.** The terminal according to any one of claims 18 to 20, wherein
the transceiver is further configured to receive a higher layer message sent by the terminal, wherein the higher layer message is used to indicate a value of a higher layer parameter, and the value of the higher layer parameter and the first field are used to determine the length of the second field.

**22.** The terminal according to claim 18, 20, or 21, wherein
the processor is further configured to: when the transceiver does not receive a configuration parameter corresponding to a format of the control information within a preset time or a received configuration parameter is a preset value, determine that the first field is null.

Codewords
(codewords)

Layers (layers)

Antenna ports
(antenna ports)

| Scrambling (Scrambling) | Modulation mapping (Modulation mapper) |
| Scrambling (Scrambling) | Modulation mapping (Modulation mapper) |

Layer mapping (Layer mapper)

Precoding (Precoding)

| Resource element mapping (Resource element mapper) | Signal generation (OFDM signal generation) |
| Resource element mapping (Resource element mapper) | Signal generation (OFDM signal generation) |

FIG. 1

10

Control
information

Control
information

**FIG. 2**

Network
device

Terminal

101. Determine control
information

102. Control information

103. Perform data transmission based on the control information

**FIG. 3**

Network device

Terminal

111. Determine control information and a configuration parameter of the control information

112. Control information and configuration parameter

113. Perform data transmission based on the control information and the configuration parameter

FIG. 4

20

Network device

201

Determining module

202

Sending module

203

Transmission module

FIG. 5

30

Terminal

301

Receiving module

302

Transmission module

FIG. 6

FIG. 7

FIG. 8

40

Network device

410

Processor

420

450

Memory

430

Transceiver

FIG. 9

500

510 — RF circuit

Wi-Fi module — 570

590

580

560

Power supply

Processor

Audio circuit

Loudspeaker 561

520

Microphone 562

Memory

Sensor — 550

Input unit

531

530

Touch panel

Display unit — 540

Another input device

Indicator

532

541

FIG. 10

60

System chip

610

Processor

620

650

Memory

630

Interface
circuit

FIG. 11

# INTERNATIONAL SEARCH REPORT

| International application No. |
|---|
| PCT/CN2018/085811 |

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CPRSABS; CNABS; CNTXT; WOTXT; WOTXT; USTXT; CNKI; 3GPP: 长度, 字段, 结构, 固定, 不变, 自适应, 改变, 调整, 单码字, 双码字, 传输块, 天线端口, 配置信息, 配置参数, 可选, DCI, length, segment, structure, fix, invariable, adaptive, change, adjust, single, double, codeword, transport block, antenna port, configuration information, reference? optional

**C. DOCUMENTS CONSIDERED TO BE RELEVANT**

| Category* | Citation of document, with indication, where appropriate, of the relevant passages | Relevant to claim No. |
|---|---|---|
| Y | CN 102781098 A (ZTE CORP.), 14 November 2012 (14.11.2012), claims 1-20 | 1-22 |
| Y | CN 101783700 A (DATANG MOBILE COMMUNICATIONS EQUIPMENT CO., LTD.), 21 July 2010 (21.07.2010), description, paragraphs [0031]-[0035] | 1-22 |
| A | EP 2723009 A2 (LG ELECTRONICS INC.), 23 April 2014 (23.04.2014), entire document | 1-22 |

☐ Further documents are listed in the continuation of Box C.    ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 July 2018 | 03 August 2018 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHU, Xiuling Telephone No. 86-(010)-62089127 |

Form PCT/ISA/210 (second sheet) (January 2015)

## INTERNATIONAL SEARCH REPORT
Information on patent family members

International application No.

PCT/CN2018/085811

| Patent Documents referred in the Report | Publication Date | Patent Family | Publication Date |
|---|---|---|---|
| CN 102781098 A | 14 November 2012 | WO 2012152214 A1 | 15 November 2012 |
| CN 101783700 A | 21 July 2010 | CN 101783700 B | 27 March 2013 |
| EP 2723009 A2 | 23 April 2014 | EP 2723009 A4 | 01 April 2015 |
| | | US 9438399 B2 | 06 September 2016 |
| | | US 2014233470 A1 | 21 August 2014 |
| | | WO 2012173432 A2 | 20 December 2012 |
| | | WO 2012173432 A3 | 04 April 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710596241